# EUROPEAN PATENT APPLICATION

(11) **EP 4 841 725 A1**
(43) Date of publication of application: **18.11.2026**
(21) Application number: 25918822.5
(22) Date of filing: 24.12.2025
(51) Int. Cl.: H01M 10/04, H01M 50/244, H01M 50/533

(54) **ELECTRODE ASSEMBLY HOLDER AND ELECTRODE TRAY COMPRISING SAME**

(30) Priority: 07.01.2025 KR 20250001953
(71) Applicant: LG Energy Solution, Ltd., Seoul 07335 (KR)
(72) Inventor: KIM, Jin Hyeok, Daejeon 34122 (KR)
(74) Representative: Goddar, Heinz J.
(86) International application number: PCT/KR2025/022717
(87) International publication number: WO 2026/151122

(57) **Abstract**

According to exemplary embodiments, an electrode assembly holder is provided. The electrode assembly holder may include: a side wall part having a hollow cylindrical shape; a support surrounded by the side wall part and spaced apart from the side wall part; and bridges connecting the side wall part and the support, wherein each of the bridges is inclined with respect to an inner surface of the side wall part.

## Description

### [Technical Field]

The present disclosure relates to an electrode assembly holder and an electrode tray including the same. This application claims the benefit of Korean Patent Application No. 10-2025-0001953, filed on January 7, 2025, the disclosure of which is incorporated herein by reference.

### [Background]

Unit cells of secondary batteries are classified into cylindrical, prismatic, and pouch-types depending on the type of case. In the case of a cylindrical battery, a separator serving as an insulator is interposed between a positive electrode and a negative electrode each coated with an active material, and the resulting stack is wound to form a jelly-roll type electrode assembly, which is then inserted into a battery can to constitute the battery.

As one type of cylindrical battery, a tab-less cylindrical battery cell including a tab-less electrode assembly has been proposed. The tab-less electrode assembly has a structure in which a positive electrode including non-coated part segments on one long side and a negative electrode including non-coated part segments on one long side are wound together. The non-coated part segments of the positive electrode protrude from the lower end of the electrode assembly, and the non-coated part segments of the negative electrode protrude from the upper end of the electrode assembly. The non-coated part segments protruding from the upper and lower ends are welded to an upper current collector plate and a lower current collector plate, respectively, so that the electrode assembly can be inserted into the battery can.

In the manufacturing process of tab-less cylindrical battery cells, it is necessary to transfer the wound jelly-roll type electrode assemblies. In order to prevent damage to the bent non-coated part segments at both ends of the tab-less electrode assembly, the tab-less electrode assemblies have been horizontally loaded onto a tray and transferred. However, in situations where vertical loading is required, there has been a problem in that existing equipment must be modified or new equipment must be manufactured. Accordingly, there has been a need for a new type of transfer tray capable of vertically loading and transferring tab-less electrode assemblies without damaging the non-coated parts.

### [Summary]

### [Technical Problem]

A technical object to be solved by the technical idea of the present disclosure is to provide an electrode assembly holder capable of storing and transferring an electrode assembly without damage.

### [Technical Solution]

According to exemplary embodiments of the present disclosure for solving the above-described problem, an electrode assembly holder is provided. The electrode assembly holder may include: a side wall part having a hollow cylindrical shape; a support surrounded by the side wall part and spaced apart from the side wall part; and bridges connecting the side wall part and the support. Each of the bridges may be inclined with respect to an inner surface of the side wall part.

Each of the bridges may be inclined with respect to the support.

One end of each of the bridges may be connected to the inner surface of the side wall part. The other end of each of the bridges may be connected to the support. The one end of each of the bridges may be closer to a bottom surface of the side wall part than the other end of each of the bridges.

A bottom surface of the support may be located at a different level from a bottom surface of the side wall part in an extending direction of the side wall part.

The support may have a hollow structure.

The support may have a ring shape.

The bridges may be spaced apart from each other.

The bridges may be spaced apart from each other at equal spacings.

The electrode assembly holder may include: an accommodation space defined by the inner surface of the side wall part; and a discharge space surrounded by the side wall part and separated from the accommodation space by the support and the bridges.

The electrode assembly holder may further include: a first hole of the support; and second holes between the bridges, wherein the accommodation space communicates with the discharge space through the first hole and the second holes.

The number of the second holes may be 2 or more and 10 or less.

Each of the bridges may form an acute angle with respect to the inner surface of the side wall part defining the accommodation space.

The accommodation space may be configured to accommodate a jelly-roll type electrode assembly. The electrode assembly may include non-coated part segments folded toward a winding center at both ends thereof. The support may support the non-coated part segments of the electrode assembly. According to exemplary embodiments of the present disclosure for solving the above-described problem, an electrode tray is provided. The electrode tray may include: a plurality of the electrode assembly holders described above; and a bottom plate supporting the electrode assembly holders from below.

### [Advantageous Effects]

According to exemplary embodiments of the present disclosure, tab-less electrode assemblies can be vertically loaded onto a tray and transferred. By providing holes in the bottom part of the electrode tray, the electrode assemblies can be transferred without being damaged.

The effects obtainable from the exemplary embodiments of the present disclosure are not limited to the effects mentioned above, and other effects not mentioned can be clearly derived and understood by those of ordinary skill in the art to which the exemplary embodiments of the present disclosure pertain from the following description. That is, unintended effects resulting from practicing the exemplary embodiments of the present disclosure may also be derived by those of ordinary skill in the art from the exemplary embodiments of the present disclosure.

### [Brief Description of the Drawings]

FIG. 1 is a development view showing a state before winding of electrodes according to exemplary embodiments.
FIG. 2 is a cross-sectional view showing a jelly-roll type electrode assembly according to exemplary embodiments.
FIG. 3 is a perspective view showing an electrode tray according to exemplary embodiments.
FIG. 4 is a cross-sectional view showing an electrode assembly holder according to exemplary embodiments.
FIG. 5 is a layout view showing an electrode assembly holder according to exemplary embodiments.
FIG. 6 is a flow chart showing a method of manufacturing a cylindrical battery according to exemplary embodiments.
FIG. 7 is a cross-sectional view showing a cylindrical battery according to exemplary embodiments.

### [Best Mode for Carrying Out the Invention]

Hereinafter, preferred embodiments of the present disclosure will be described in detail with reference to the accompanying drawings. Prior to this, it should be understood that terms and words used in this specification and the claims should not be interpreted as being limited to their ordinary or dictionary meanings, but should be interpreted as having meanings and concepts consistent with the technical idea of the present disclosure, based on the principle that the inventor can appropriately define the concepts of terms in order to best describe his or her own invention.

Therefore, the embodiments described in this specification and the configurations shown in the drawings are merely the most preferred embodiments of the present disclosure and do not represent all of the technical ideas of the present disclosure. Accordingly, it should be understood that various equivalents and modifications capable of replacing them may exist at the time of filing of the present application.

In addition, in describing the present disclosure, when it is determined that a detailed description of a related known configuration or function may obscure the gist of the present disclosure, the detailed description thereof will be omitted.

Since the embodiments of the present disclosure are provided to more completely explain the present disclosure to those of ordinary skill in the art, the shapes and sizes of components in the drawings may be exaggerated, omitted, or schematically illustrated for clearer description. Accordingly, the size or ratio of each component does not entirely reflect its actual size or ratio.

### (First Embodiment)

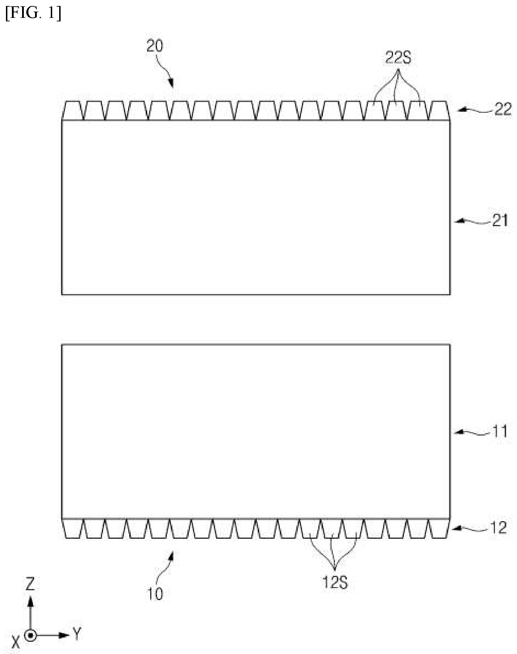

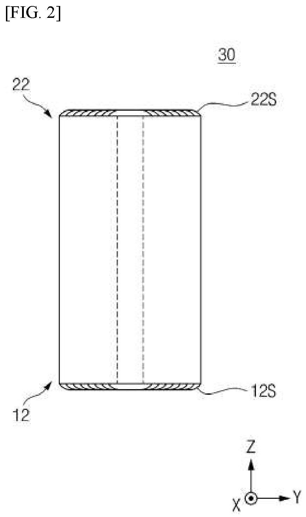

FIG. 1 is a development view showing electrodes 10 and 20 according to exemplary embodiments. FIG. 1 illustrates a state before winding of the electrodes 10, 20. FIG. 2 is a cross-sectional view showing a jelly-roll type electrode assembly 30 according to exemplary embodiments.

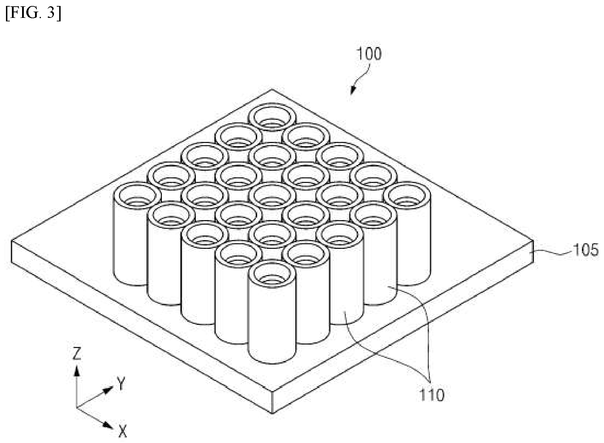

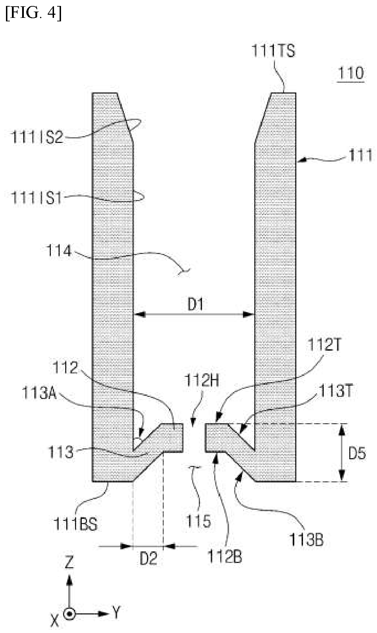

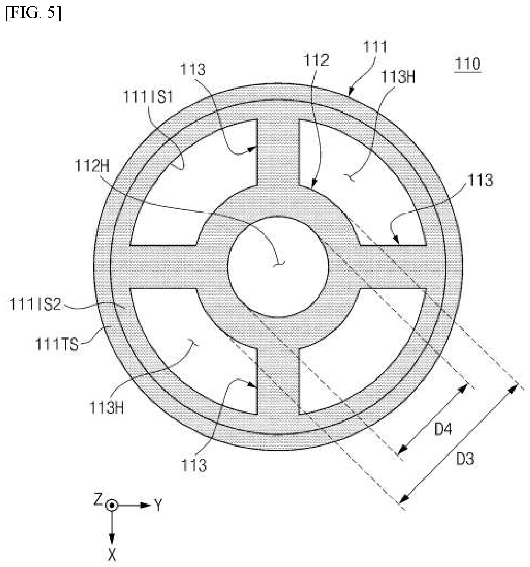

FIG. 3 is a perspective view showing an electrode tray 100 according to exemplary embodiments. FIG. 4 is a cross-sectional view showing a holder 110 of the electrode tray 100 according to exemplary embodiments. FIG. 5 is a layout view of the holder 110 of the electrode tray 100 according to exemplary embodiments.

Referring to FIGS. 1 and 2, the jelly-roll type electrode assembly 30 may be formed by sequentially stacking a first electrode 10, a separator, a second electrode 20, and a separator to form an electrode stack, and then winding the electrode stack along a longitudinal direction (Y direction). A winding axis portion of the jelly-roll type electrode assembly 30 may be empty. The longitudinal direction (Y direction) of each of the first electrode 10 and the second electrode 20 may correspond to a circumferential direction of the jelly-roll type electrode assembly 30. The width direction (Z direction) of each of the first electrode 10 and the second electrode 20 may correspond to a winding axis direction of the jelly-roll type electrode assembly 30. The normal direction (X direction) of the surface of each of the first electrode 10 and the second electrode 20 may correspond to a radial direction of the jelly-roll type electrode assembly 30.

The first electrode 10 may include a current collector and an active material layer. A portion of the first electrode 10 coated with an active material may be a coated part 11. A portion of the first electrode 10 not coated with the active material may be a non-coated part 12. The current collector may be exposed at the non-coated part 12.

The non-coated part 12 may include segments 12S arranged in the Y direction. The segments 12S may be independently folded. In the jelly-roll type electrode assembly 30, each of the segments 12S may be folded toward the winding center of the jelly-roll type electrode assembly 30.

According to exemplary embodiments, the first electrode 10 may be a positive electrode. The first electrode 10 may include aluminum foil as a current collector. The first electrode 10 may include, as a positive electrode active material, LiCoO₂, LiNiO₂, LiNi₁₋ₓCoₓO₂ (0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), or LiFePO₄.

The second electrode 20 may include a current collector and an active material layer. A portion of the second electrode 20 coated with an active material may be a coated part 21. A portion of the second electrode 20 not coated with the active material may be a non-coated part 22. The current collector may be exposed at the non-coated part 22.

The non-coated part 22 may include segments 22S arranged in the Y direction. The segments 22S may be independently folded. In the jelly-roll type electrode assembly 30, each of the segments 22S may be folded toward the winding center of the jelly-roll type electrode assembly 30.

According to exemplary embodiments, the second electrode 20 may be a negative electrode. The second electrode 20 may include copper foil or nickel foil as a current collector. The second electrode 20 may include, as a negative electrode active material, lithium metal, graphite, coke, silicon, tin, or the like.

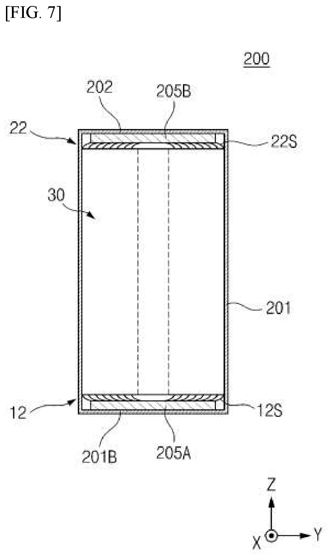

The electrode assembly 30 may be a tab-less type electrode assembly. The electrode assembly 30 may include the segments 12S of the non-coated part 12 of the first electrode 10 protruding from the lower end of the electrode assembly 30, and the segments 22S of the non-coated part 22 of the second electrode 20 protruding from the upper end of the electrode assembly 30. Each of the segments 12S, 22S of the non-coated parts 12, 22 may be folded toward the winding center of the electrode assembly 30. Each of the segments 12S, 22S of the non-coated parts 12 and 22 of the electrode assembly 30 may be welded to current collector plates (205A and 205B in FIG. 7) during a cell assembly process.

Referring to FIGS. 1 through 5, the electrode tray 100 may be a tray for transporting the jelly-roll type electrode assembly 30. For example, the electrode tray 100 may be used for transferring the electrode assembly 30 to insert the electrode assembly 30 into a can after a winding process of the electrode assembly 30. The electrode tray 100 may include a plurality of holders 110 and a bottom plate 105. The plurality of holders 110 may be disposed on the bottom plate 105. The bottom plate 105 may support the plurality of holders 110 from below.

The holder 110 may be configured to accommodate the electrode assembly 30. The electrode assembly 30 may be loaded into the holder 110 such that the non-coated part 12 of the first electrode 10 faces downward in the Z direction and the non-coated part 22 of the second electrode 20 faces upward in the Z direction.

Referring to FIGS. 4 and 5, the holder 110 may include a side wall part 111, a support 112, and bridges 113.

The side wall part 111 may include a top surface 111TS, inner surfaces 111IS1 and 111IS2, and a bottom surface 111BS.

The top surface 111TS of the side wall part 111 may be an upper surface of the side wall part 111 in the Z direction. An inlet into which the electrode assembly (30 in FIG. 2) is inserted may be formed at the top surface 111TS. The bottom surface 111BS of the side wall part 111 may be a lower surface of the side wall part 111 in the Z direction. The top surface 111TS and the bottom surface 111BS may be spaced apart from each other in the Z direction.

The inner surfaces 111IS1 and 111IS2 of the side wall part 111 may define an accommodation space 114. The inner surface 111IS1 may be substantially perpendicular to the Y direction. According to exemplary embodiments, a width in the Y direction of the accommodation space 114 defined by the inner surface 111IS1 may be substantially the same along the Z direction.

The inner surface 111IS2 may be inclined with respect to the Y direction. A width in the Y direction of the accommodation space 114 defined by the inner surface 111IS2 may be greatest at the upper part in the Z direction (i.e., the inlet of the holder 110). According to exemplary embodiments, the width in the Y direction of the accommodation space 114 defined by the inner surface 111IS2 may gradually increase toward the upper part in the Z direction.

When the electrode assembly 30 is mounted on the holder 110, if an alignment error occurs between the electrode assembly 30 and the holder 110, the electrode assembly 30 may be guided along the inclined inner surface 111IS2 and loaded into the accommodation space 114. Accordingly, the alignment error between the electrode assembly 30 and the holder 110 can be compensated for.

The support 112 may support, from below, the jelly-roll type electrode assembly (30 in FIG. 2) inserted into the accommodation space 114. The support 112 may support the plurality of bent segments (12S in FIG. 2) of the non-coated part (12 in FIG. 2) of the first electrode (10 in FIG. 2) of the electrode assembly 30.

The support 112 may be surrounded by the side wall part 111. The support 112 may be substantially perpendicular to the side wall part 111. The support 112 may be spaced apart from the inner surface 111IS1 of the side wall part 111 by a distance D2. According to exemplary embodiments, the distance D2 may be about 0.5 mm or more. According to exemplary embodiments, the distance D2 may be about 1.0 mm or more. According to exemplary embodiments, the distance D2 may be about 1.5 mm or more. According to exemplary embodiments, the distance D2 may be about 2.0 mm or more. According to exemplary embodiments, the distance D2 may be about 4.0 mm or less. According to exemplary embodiments, the distance D2 may be about 3.5 mm or less. According to exemplary embodiments, the distance D2 may be about 3.0 mm or less. According to exemplary embodiments, the distance D2 may be about 2.5 mm or less. According to exemplary embodiments, the distance D2 may be about 2.2 mm or less.

The support 112 may have a width D3 (or diameter) in a direction perpendicular to the Z direction. According to exemplary embodiments, the width D3 may be about 10 mm or more. According to exemplary embodiments, the width D3 may be about 12 mm or more. According to exemplary embodiments, the width D3 may be about 14 mm or more. According to exemplary embodiments, the width D3 may be about 16 mm or more. According to exemplary embodiments, the width D3 may be about 24 mm or less. According to exemplary embodiments, the width D3 may be about 22 mm or less. According to exemplary embodiments, the width D3 may be about 20 mm or less. According to exemplary embodiments, the width D3 may be about 18 mm or less.

The support 112 may have a hollow structure. That is, the support 112 may include a hole 112H. According to exemplary embodiments, the hole 112H may have a circular shape. According to exemplary embodiments, the support 112 may have a ring shape.

The hole 112H of the support 112 may have a width D4 (or diameter) in a direction perpendicular to the Z direction. According to exemplary embodiments, the width D4 may be about 2 mm or more. According to exemplary embodiments, the width D4 may be about 4 mm or more. According to exemplary embodiments, the width D4 may be about 6 mm or more. According to exemplary embodiments, the width D4 may be about 8 mm or more. According to exemplary embodiments, the width D4 may be about 16 mm or less. According to exemplary embodiments, the width D4 may be about 14 mm or less. According to exemplary embodiments, the width D4 may be about 12 mm or less. According to exemplary embodiments, the width D4 may be about 10 mm or less.

The support 112 may include a bottom surface 112B and a top surface 112T. The bottom surface 112B may be a lower surface of the support 112 in the Z direction. The top surface 112T may be an upper surface of the support 112 in the Z direction. The bottom surface 112B and the top surface 112T may be substantially parallel. The bottom surface 112B and the top surface 112T may be spaced apart from each other in the Z direction.

According to exemplary embodiments, the bottom surface 112B of the support 112 may be located at a different level from the bottom surface 111BS of the side wall part 111 in the Z direction. According to exemplary embodiments, the bottom surface 112B of the support 112 may be located at a higher level than the bottom surface 111BS of the side wall part 111 in the Z direction.

According to exemplary embodiments, the top surface 112T of the support 112 may be spaced apart from the bottom surface 111BS of the side wall part 111 by a distance D5 in the Z direction. According to exemplary embodiments, the distance D5 may be about 1 mm or more. According to exemplary embodiments, the distance D5 may be about 2 mm or more. According to exemplary embodiments, the distance D5 may be about 4 mm or more. According to exemplary embodiments, the distance D5 may be about 5 mm or more. According to exemplary embodiments, the distance D5 may be about 12 mm or less. According to exemplary embodiments, the distance D5 may be about 10 mm or less. According to exemplary embodiments, the distance D5 may be about 8 mm or less. According to exemplary embodiments, the distance D5 may be about 7 mm or less.

The bridges 113 may connect the side wall part 111 and the support 112. One end of each of the bridges 113 may be connected to the inner surface 111IS1 of the side wall part 111. The other end of each of the bridges 113 may be connected to the support 112. The one end of each of the bridges 113 may be closer to the bottom surface 111BS of the side wall part 111 than the other end of each of the bridges 113. According to exemplary embodiments, the side wall part 111, the support 112, and the bridges 113 may be integrally formed.

Each of the bridges 113 may include a top surface 113T facing the accommodation space 114 and a bottom surface 113B facing the discharge space 115. The top surface 113T and the bottom surface 113B may be substantially parallel.

Each of the bridges 113 may be inclined with respect to the side wall part 111. The top surface 113T of each of the bridges 113 may be inclined with respect to the inner surface 111IS1 of the side wall part 111. The top surface 113T of each of the bridges 113 may be inclined with respect to the Y direction. The bottom surface 113B of each of the bridges 113 may be inclined with respect to the inner surface 111IS1 of the side wall part 111. The bottom surface 113B of each of the bridges 113 may be inclined with respect to the Y direction.

Each of the bridges 113 may be inclined with respect to the support 112. The top surface 113T of each of the bridges 113 may be inclined with respect to the top surface 112T of the support 112. The top surface 113T of each of the bridges 113 may be inclined with respect to the Z direction. The bottom surface 113B of each of the bridges 113 may be inclined with respect to the bottom surface 112B of the support 112. The bottom surface 113B of each of the bridges 113 may be inclined with respect to the Z direction.

According to exemplary embodiments, the top surface 113T of each of the bridges 113 may be connected to the top surface 112T of the support 112. According to exemplary embodiments, the bottom surface 113B of each of the bridges 113 may be connected to the bottom surface 111BS of the side wall part 111. However, the positions of the bridges 113 are not limited thereto. According to other exemplary embodiments, the bottom surface 113B of each of the bridges 113 may not be connected to the bottom surface 111BS of the side wall part 111. That is, the bottom surface 113B of each of the bridges 113 may be spaced apart from the bottom surface 111BS of the side wall part 111 in the Z direction.

The top surface 113T of each of the bridges 113 may form a predetermined angle 113A with respect to the inner surface 111IS1 of the side wall part 111 defining the accommodation space 114. The angle 113A may be an acute angle. According to exemplary embodiments, the angle 113A may be greater than about 0°. According to exemplary embodiments, the angle 113A may be about 10° or more. According to exemplary embodiments, the angle 113A may be about 20° or more. According to exemplary embodiments, the angle 113A may be about 40° or more. According to exemplary embodiments, the angle 113A may be about 60° or more. According to exemplary embodiments, the angle 113A may be less than about 90°. According to exemplary embodiments, the angle 113A may be about 80° or less. According to exemplary embodiments, the angle 113A may be about 70° or less. According to exemplary embodiments, the angle 113A may be about 50° or less.

The bridges 113 may be spaced apart from each other. According to exemplary embodiments, the bridges 113 may be arranged to be spaced apart from each other at equal spacings. According to other exemplary embodiments, the bridges 113 may be arranged at different spacings from each other.

The holder 110 may further include holes 113H between the bridges 113. According to exemplary embodiments, each of the holes 113H may have substantially the same shape. According to other exemplary embodiments, each of the holes 113H may have different shapes from each other. According to exemplary embodiments, each of the holes 113H may be arranged at equal spacings. According to other exemplary embodiments, the holes 113H may be arranged at different spacings from each other.

The number of the bridges 113 may be plural. The number of the holes 113H may be equal to the number of the bridges 113. The number of the holes 113H may be plural.

Although FIG. 5 illustrates an embodiment in which there are four bridges 113, the number of the bridges 113 is not limited thereto. According to exemplary embodiments, the number of the bridges 113 may be 2 or more. According to exemplary embodiments, the number of the bridges 113 may be 3 or more. According to exemplary embodiments, the number of the bridges 113 may be 5 or more. According to exemplary embodiments, the number of the bridges 113 may be 10 or more. According to exemplary embodiments, the number of the bridges 113 may be 20 or less. According to exemplary embodiments, the number of the bridges 113 may be 18 or less. According to exemplary embodiments, the number of the bridges 113 may be 15 or less. According to exemplary embodiments, the number of the bridges 113 may be 10 or less.

Although FIG. 5 illustrates an embodiment in which there are four holes 113H, the number of the holes 113H is not limited thereto. According to exemplary embodiments, the number of the holes 113H may be 2 or more. According to exemplary embodiments, the number of the holes 113H may be 3 or more. According to exemplary embodiments, the number of the holes 113H may be 5 or more. According to exemplary embodiments, the number of the holes 113H may be 10 or more. According to exemplary embodiments, the number of the holes 113H may be 20 or less. According to exemplary embodiments, the number of the holes 113H may be 18 or less. According to exemplary embodiments, the number of the holes 113H may be 15 or less. According to exemplary embodiments, the number of the holes 113H may be 10 or less.

The accommodation space 114 may be a space for accommodating the jelly-roll type electrode assembly 30. The accommodation space 114 may be defined by the inner surfaces 111IS1 and 111IS2 of the side wall part 111, the top surface 112T of the support 112, and the top surface 113T of each of the bridges 113.

The accommodation space 114 may have a width D1 (or diameter). According to exemplary embodiments, the width D1 of the accommodation space 114 may be about 15.0 mm or more. According to exemplary embodiments, the width D1 of the accommodation space 114 may be about 17.0 mm or more. According to exemplary embodiments, the width D1 of the accommodation space 114 may be about 18.0 mm or more. According to exemplary embodiments, the width D1 of the accommodation space 114 may be about 20.0 mm or more. According to exemplary embodiments, the width D1 of the accommodation space 114 may be about 30.0 mm or less. According to exemplary embodiments, the width D1 of the accommodation space 114 may be about 24.0 mm or less. According to exemplary embodiments, the width D1 of the accommodation space 114 may be about 23.0 mm or less. According to exemplary embodiments, the width D1 of the accommodation space 114 may be about 22.0 mm or less.

The discharge space 115 may be separated from the accommodation space 114 by the support 112 and the bridges 113. The discharge space 115 may be located below the accommodation space 114 in the Z direction. The discharge space 115 may be defined by the bottom surface 112B of the support 112 and the bottom surface 113B of each of the bridges 113. The discharge space 115 may be surrounded by the side wall part 111.

The discharge space 115 may communicate with the accommodation space 114. The discharge space 115 may communicate with the accommodation space 114 through the hole 112H of the support 112 and the holes 113H between the bridges 113. Foreign substances in the accommodation space 114 may be discharged to the discharge space 115 through the plurality of holes 112H and 113H. As a result, contamination of the electrode assembly 30 inserted into the accommodation space 114 can be prevented.

In addition, the electrode assembly holder 110 according to exemplary embodiments of the present disclosure includes the support 112 to support the plurality of segments 12S at the lower end of the electrode assembly 30 and maintain the folded state of the plurality of segments 12S. The hole 112H of the support 112 can prevent excessive pressure from being applied to the plurality of segments 12S of the electrode assembly 30. In addition, since the bridges 113 have a shape inclined downward in the Z direction as they approach the side wall part 111, the bridges 113 can minimize contact with the plurality of segments 12S at the lower end of the electrode assembly 30. That is, the bridges 113 can also prevent excessive pressure from being applied to the plurality of segments 12S of the electrode assembly 30. Accordingly, the electrode assembly 30 can be loaded onto the holder 110 and transferred without damage.

### (Second Embodiment)

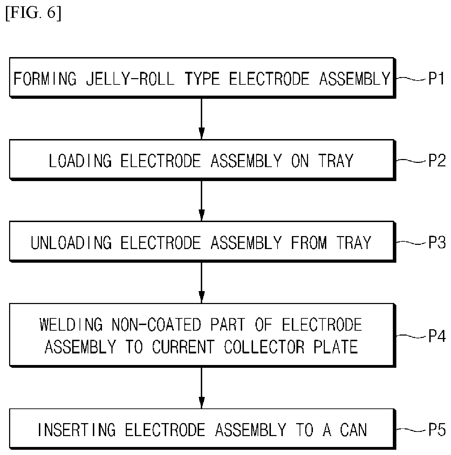

FIG. 6 is a flow chart showing a method of manufacturing a cylindrical battery 200 according to exemplary embodiments. FIG. 7 is a cross-sectional view showing the cylindrical battery 200 according to exemplary embodiments.

Referring to FIGS. 1 through 7 together, the method of manufacturing the cylindrical battery 200 may include a step of P1 of forming the jelly-roll type electrode assembly 30. The jelly-roll type electrode assembly 30 may be formed by sequentially winding the first electrode 10, the separator, the second electrode 20, and the separator around a winding core. The segments 12S of the non-coated part 12 of the first electrode 10 may be located at the lower end of the electrode assembly 30, and the segments 22S of the non-coated part 22 of the second electrode 20 may be located at the upper end of the electrode assembly 30. The segments 12S and 22S of the non-coated parts 12 and 22 at both ends of the electrode assembly 30 may be folded toward the winding center of the electrode assembly 30. According to exemplary embodiments, the cylindrical battery 200 may be a tab-less type battery.

The method of manufacturing the cylindrical battery 200 may include a step of P2 of loading the electrode assembly 30 onto the electrode tray 100. The electrode assembly 30 may be loaded onto the holder 110 of the electrode tray 100. The bent segments 12S of the non-coated part 12 located at the lower end of the electrode assembly 30 may be supported by the support 112 of each holder 110.

The method of manufacturing the cylindrical battery 200 may include a step of P3 of unloading the electrode assembly 30 from the electrode tray 100 after transferring the electrode assembly 30 to a required position. The electrode tray 100 includes the plurality of holes 112H and 113H, so that the electrode assembly 30 can be vertically loaded and transferred without damage and contamination of the segments 12S of the non-coated part 12.

The method of manufacturing the cylindrical battery 200 may include a step of P4 of welding the segments 12S and 22S of the non-coated parts 12 and 22 of the electrode assembly 30 to current collector plates 205A and 205B, respectively. The segments 12S of the non-coated part 12 of the electrode assembly 30 may be welded to the first current collector plate 205A. The segments 22S of the second non-coated part 22 of the electrode assembly 30 may be welded to the second current collector plate 205B.

The method of manufacturing the cylindrical battery 200 may include a step of P5 of inserting the electrode assembly 30 into a can 201. Thereafter, the first current collector plate 205A may be welded to a bottom part 201B of the can 201. The second current collector plate 205B may be welded to a top cap 202. The can 201 may serve as a positive electrode terminal connecting the cylindrical battery 200 to the outside. The top cap 202 may serve as a negative electrode terminal connecting the cylindrical battery 200 to the outside.

The present disclosure has been described in more detail through the drawings and embodiments. However, the configurations described in the drawings or embodiments of this specification are merely one embodiment of the present disclosure and do not represent all of the technical ideas of the present disclosure. Accordingly, it should be understood that various equivalents and modifications capable of replacing them may exist at the time of filing of the present application.

## Claims

1. An electrode assembly holder comprising:
a side wall part having a hollow cylindrical shape;
a support surrounded by the side wall part and spaced apart from the side wall part; and
bridges connecting the side wall part and the support,
wherein each of the bridges is inclined with respect to an inner surface of the side wall part.

2. The electrode assembly holder of claim 1, wherein each of the bridges is inclined with respect to the support.

3. The electrode assembly holder of claim 1, wherein the support is perpendicular to the side wall part.

4. The electrode assembly holder of claim 1, wherein
one end of each of the bridges is connected to the inner surface of the side wall part,
the other end of each of the bridges is connected to the support, and
the one end of each of the bridges is closer to a bottom surface of the side wall part than the other end of each of the bridges.

5. The electrode assembly holder of claim 1, wherein a bottom surface of the support is located at a different level from a bottom surface of the side wall part in an extending direction of the side wall part.

6. The electrode assembly holder of claim 1, wherein the support has a hollow structure .

7. The electrode assembly holder of claim 1, wherein the support has a ring shape.

8. The electrode assembly holder of claim 1, wherein the bridges are spaced apart from each other.

9. The electrode assembly holder of claim 1, wherein the bridges are spaced apart from each other at equal spacings.

10. The electrode assembly holder of claim 1, wherein the electrode assembly holder comprises:
an accommodation space defined by the inner surface of the side wall part; and
a discharge space surrounded by the side wall part and separated from the accommodation space by the support and the bridges.

11. The electrode assembly holder of claim 10, wherein the electrode assembly holder further comprises:
a first hole in the support; and
second holes between the bridges,
wherein the accommodation space communicates with the discharge space through the first hole and the second holes.

12. The electrode assembly holder of claim 11, wherein the number of the second holes is 2 or more and 10 or less.

13. The electrode assembly holder of claim 10, wherein each of the bridges forms an acute angle with respect to the inner surface of the side wall part defining the accommodation space.

14. The electrode assembly holder of claim 10, wherein the accommodation space is configured to accommodate a jelly-roll type electrode assembly,
the electrode assembly comprises non-coated part segments folded toward a winding center at both ends thereof, and
the support supports the non-coated part segments of the electrode assembly.

15. An electrode tray comprising:
a plurality of the electrode assembly holders of claim 1; and
a bottom plate supporting the electrode assembly holders from below.
